# EUROPÄISCHE PATENTSCHRIFT

(11) **EP 2 170 630 B1**
(45) Veröffentlichungstag und Bekanntmachung des Hinweises auf die Patenterteilung: **30.03.2011**
(21) Anmeldenummer: 08826396.7
(22) Anmeldetag: 16.07.2008
(51) Int. Cl.: B60C 23/00

(54) **DRUCKLUFTREIFEN-VENTILVORRICHTUNG UND SYSTEM UND VERFAHREN ZUR EINSTELLUNG DES REIFENDRUCKS**
VALVE DEVICE FOR A PNEUMATIC TYRE, AND SYSTEM AND METHOD FOR ADJUSTING THE TYRE PRESSURE
DISPOSITIF DE SOUPAPE POUR BANDAGE DE ROUE À AIR COMPRIMÉ AINSI QUE SYSTÈME ET PROCÉDÉ D'ÉTABLISSEMENT DE LA PRESSION DU BANDAGE DE ROUE

(30) Priorität: 17.07.2007 DE 102007033625
(43) Veröffentlichungstag der Anmeldung: 07.04.2010
(73) Patentinhaber: Pritschet, Horst, 85051 Ingolstadt (DE)
(72) Erfinder: Pritschet, Horst, 85051 Ingolstadt (DE)
(74) Vertreter: Staudt, Hans-Peter
(86) Internationale Anmeldenummer: PCT/DE2008/075003
(87) Internationale Veröffentlichungsnummer: WO 2009/010054

(56) Entgegenhaltungen:
- EP-A- 0 511 135
- EP-A- 0 531 070
- GB-A- 2 234 801
- US-A1- 2002 170 597

## Beschreibung

Die Erfindung betrifft eine Druckluftreifen-Ventilvorrichtung, ein System zur Einstellung des Reifendrucks eines Druckluftreifens eines Fahrzeugs und Verfahren zum Erhöhen, Reduzieren und Einstellen des Reifendrucks eines Druckluftreifens eines Fahrzeugs.

Es ist bekannt, bei Fahrzeugen unterschiedlichster Bauart Reifen zu verwenden, die mit Luft oder einem anderen Gas aufgepumpt sind. Sofern im Folgenden der Begriff Luft oder Druckluft verwendet wird, schließt dies alle zur Befüllung von Reifen bekannten und geeigneten anderen Gase ein. Mit Druckluftreifen ausgerüstete Fahrzeuge umfassen Kraftfahrzeuge wie beispielsweise Automobile, Motorräder, Lastkraftwagen, Zugmaschinen, Baustellenfahrzeuge, Wohnmobile, Landmaschinen, Armeefahrzeuge und dergleichen. Diese Fahrzeuge sind teilweise für reinen Straßenbetrieb, teilweise ausschließlich für den Betrieb in unbefestigtem Gelände aber teilweise auch für so genannten Mischbetrieb ausgelegt, d. h. für Betrieb auf unbefestigtem Gelände und auf glatten Straßen. Der Luftdruck im Reifen, im Folgenden auch Reifendruck genannt, hängt neben einer Vielzahl von Parametern wie beispielsweise der Bauart des Reifens, dem Gewicht des Fahrzeugs und der Anzahl der Reifen pro Fahrzeug auch von dem vorgesehen Einsatzzweck und der Fahrzeuggeschwindigkeit ab. Bei Betrieb auf glatten, insbesondere asphaltierten Straßen und bei hohen Geschwindigkeiten ist ein relativ hoher Reifendruck empfehlenswert, insbesondere im Hinblick auf eine Verminderung des Rollwiderstandes, wodurch die Wirtschaftlichkeit und Sicherheit erhöht werden, während auf relativ weichem Gelände, beispielsweise auf Schlamm, Sand oder Schnee zur Verbesserung der Traktion durch Vergrößern der Kontaktfläche des Reifens mit dem Untergrund ein relativ niedriger Reifendruck vorteilhafter ist. Insbesondere bei Geländefahrzeugen und Militärfahrzeugen ist es wünschenswert, den Reifendruck dem jeweiligen Gelände und Einsatzzweck anzupassen. Hierzu sind Systeme bekannt, die mit einem Fahrzeug mitgeführt werden können beziehungsweise als Baugruppe in das Fahrzeug integriert sind, welche in der Lage sind, mittels einer bordeigenen Druckluftquelle den Reifendruck zu variieren, wobei dies sowohl im Stand als auch während der Fahrt des Fahrzeugs möglich ist. Derartige Systeme sind beispielsweise aus der DE 202 20 301 U1 und der DE 35 86 727 T2 bekannt.

Systeme der vorstehend dargelegten Art, insbesondere solche, welche ein Einstellen des Reifendrucks auch während der Fahrt ermöglichen, weisen während der Fahrt nicht rotierende Druckluftquellen, beispielsweise einen Druckluftkompressor, und entsprechende Druckluftleitungen auf, mit denen Druckluft den Reifen zugeführt werden kann. Um die sich während der Fahrt drehenden Reifen an das Druckluftsystem anschließen zu können, kann beispielsweise eine Verrohrung, d. h. die Bereitstellung einer entsprechenden Druckluftleitung von der Druckluftanlage über die Achsmitte zur Radnabe erfolgen. An einer definierten Stelle der Radnabe geht die Leitung der Druckluft von einem nicht rotierenden zu einem rotierenden Bauteil über, wie beispielsweise in der DE 35 86 727 T2 offenbart. Da Radnaben oftmals Planetengetriebe und Lager aufweisen, die in einem Ölbad oder Ölsumpf laufen, um die notwendige Schmierung zu erhalten, müssen die Übergangsstellen von dem stehenden Teil der Druckluftleitung zu dem rotierenden Teil mit Lippendichtungen oder Wellendichtringen abgedichtet werden. Treten an diesen Stellen Undichtigkeiten auf, so entweicht die Druckluft aus der Radnabe, was zu einem Verlust an Öl und damit an Schmierfähigkeit führt und einen Defekt der Planetengetriebe und Lager zur Folge haben kann.

Aus diesem Grunde werden die Druckluftleitungen zum Reifen vorzugsweise drucklos gehalten mit Ausnahme der Betriebszustände, welche beim Erhöhen des Reifendruckes beziehungsweise beim Reduzieren des Reifendrucks vorliegen.

Die DE 35 86 727 T2 verwendet diesbezüglich eine Druckluftquelle und eine Steuervorrichtung, mittels derer Luft mit einem vorbestimmten Druck zu Ventilen geleitet wird, welche mit dem Druckluftreifen in Verbindung stehen. Diese bekannten Ventile sind als Membranventile ausgelegt.

Die US 2002/170597 A1 und die GB 2234801 A offenbaren jeweils Ventilvorrichtungen, bei denen ein Steuerkolben für den Ruhezustand, die Entlüftung des Reifens und das Auffüllen des Reifens drei unterschiedliche Stellungen einnimmt. Zudem wird zum Entlüften des Reifens jeweils ein Überdruck aufgebracht. Die EP 0 511 135 A1 offenbart eine Ventilvorrichtung, bei der als Steuerelement eine Membran vorgesehen ist. Auch diese Membran nimmt für die Entlüftung des Reifens eine von der Ruhestellung verschiedene Betriebsstellung ein, wobei auch in diesem Fall zum Entlüften des Reifens ein Überdruck angelegt wird.

Der Erfindung liegt die Aufgabe zugrunde, eine Druckluftreifen-Ventilvorrichtung, ein System zur Einstellung des Reifendrucks eines Druckluftreifens und Verfahren zum Erhöhen, Reduzieren und Einstellen des Reifendrucks eines Druckluftreifens bereitzustellen, die beziehungsweise das eine genaue und exakte Regelung des Reifendrucks gewährleisten, zuverlässig funktionieren und dennoch kostengünstig herzustellen sind.

Die Lösung dieser Aufgabe wird in den Patentansprüchen 1 und 13 definiert. Vorteilhafte Ausführungsformen sind in den Unteransprüchen angegeben.

Die erfindungsgemäß Druckluftreifen-Ventilvorrichtung umfasst ein Reifenventilgehäuse mit einer Druckleitungsanschlussöffnung, an die eine Druckluftleitung anschließbar ist, mit einer Reifenanschlussöffnung, die an einen Druckluftreifen anschließbar ist, und mit einer Entlüftungsöffnung. Sie umfasst ferner ein Reifenverschlussventil, das eine Verschlussstellung und eine Offenstellung einnehmen kann, sowie einen Steuerkolben, der eine Ruhestellung und eine Reifenentlüftungsstellung einnehmen kann. Der Steuerkolben verschließt in der Ruhestellung die Entlüftungsöffnung und gibt diese in einer Reifenentlüftungsstellung frei. Gleichzeitig hält der Steuerkolben in einer Reifenentlüftungsstellung das Reifenverschlussventil offen, sodass in dieser Stellung des Steuerkolbens Luft aus dem Druckluftreifen durch die Entlüftungsöffnung abgelassen werden kann.

Die erfindungsgemäße Druckluftreifen-Ventilvorrichtung umfasst somit zwei separate mechanische Bauteile, nämlich ein Reifenverschlussventil und einen Steuerkolben, wobei der Steuerkolben das Reifenverschlussventil zwangsweise öffnen kann, um ein Ablassen von Luft aus dem Druckluftreifen zu bewirken. Dieser konstruktive Aufbau der erfindungsgemäßen Druckluftreifen-Ventilvorrichtung ermöglicht eine exakte und zuverlässige Einstellung des Reifendrucks in dem Druckluftreifen.

Die Bewegung des Steuerkolbens kann auf verschiedenartige Weise erfolgen, insbesondere beispielsweise durch eine mechanisch, elektrisch, hydraulisch, pneumatisch oder in sonstiger Weise aufgebrachte Kraft. In einer bevorzugten Ausführungsform wird die Kraft peumatisch aufgebracht. Hierzu ist der Steuerkolben in einer Steuerkolbenführung geführt und dazu ausgelegt, ein Durchlassen von Druckluft in einer ersten Richtung zu ermöglichen und den Durchtritt von Luft in einer zweiten Richtung zu sperren.

Zu diesem Zweck kann der Steuerkolben ein Rückschlagventil aufweisen, das ein Durchlassen von Druckluft in einer ersten Richtung ermöglicht und den Durchtritt von Luft in einer zweiten Richtung versperrt.

Alternativ oder zusätzlich kann der Steuerkolben kann ein Dichtelement aufweisen, vorzugsweise einen Lippendichtring, der in einer Nut des Steuerkolbens gehalten sein kann, wobei dieses Dichtelement ein Durchlassen von Druckluft in einer ersten Richtung ermöglicht und den Durchtritt von Luft in einer zweiten Richtung versperrt. Hierzu kann der Lippendichtring eine Dichtlippe aufweisen, die schräg zu der Steuerkolbenführung verläuft.

Dieses vorzugsweise vorgesehene Dichtelement in der beschriebenen vorteilhaften Ausgestaltung ermöglicht es, den Steuerkolben durch Anlegen eines Unterdrucks an der Druckleitungsanschlussöffnung in eine Reifenentlüftungsstellung zu bringen, in der der Steuerkolben das Reifenverschlussventil in eine Offenstellung zwingt und Luft aus dem Druckluftreifen durch die Entlüftungsöffnung abgelassen werden kann. Vorzugsweise sind hierzu in dem Reifenventilgehäuse die Steuerkolbenführung, die Druckleitungsanschlussöffnung, die Reifenanschlussöffnung und die Entlüftungsöffnung miteinander verbunden, d. h. in Strömungsverbindung, sofern nicht durch entsprechend eingebaute bewegliche Bauteile temporär versperrt.

Der Steuerkolben kann zusätzliche Durchtrittsbohrungen aufweisen, um den Durchtritt von Luft beim Entlüften des Druckluftreifens zu erhöhen.

Das Spiel zwischen dem Steuerkolben und der Steuerkolbenführung liegt vorzugsweise zwischen etwa 0,1 mm und 0,5 mm, insbesondere bei ca. 0,3 mm.

Vorzugsweise weist der Steuerkolben eine konisch verlaufende Kontaktfläche auf, die in einer Reifenentlüftungsstellung des Steuerkolbens das Reifenverschlussventil in einer Offenstellung hält. Der Winkel zwischen der Kontaktfläche und der Mittelachse des Steuerkolbens beträgt vorzugsweise etwa 15 Grad bis 20 Grad.

Das Reifenverschlussventil weist vorzugsweise einen Betätigungsschaft mit einem Betätigungsschaftende auf, wobei das Betätigungsschaftende dazu ausgelegt ist, mit der Kontaktfläche des Steuerkolbens in Berührung zu gelangen, wenn der Steuerkolben eine Reifenentlüftungsstellung einnimmt, wodurch das Reifenverschlussventil infolge des Kontakts der Kontaktfläche des Steuerkolbens mit dem Betätigungsschaftende des Betätigungsschafts das Reifenverschlussventil in eine Offenstellung drückt.

Das Reifenverschlussventil weist vorzugsweise einen Reifenverschlussventildichtring auf, der in der Verschlussstellung des Reifenverschlussventils auf einem Reifenverschlussventilsitz aufliegt. Der Reifenverschlussventilsitz kann konisch oder eben ausgeführt und der Reifenverschlussventildichtring ein O-Ring, beispielsweise aus einem Elastomer sein.

Der Betätigungsschaft des Reifenverschlussventils verläuft vorzugsweise durch einen Betätigungsschaftdurchtritt in dem Reifenventilgehäuse, welcher mit der Steuerkolbenführung, der Druckleitungsanschlussöffnung, der Reifenanschlussöffnung und der Entlüftungsöffnung verbunden ist, d. h. den Durchtritt von Gas ermöglicht, sofern nicht durch eingefügte Bauteile temporär versperrt.

Vorzugsweise ist eine Reifenverschlussventilfeder vorgesehen, die das Reifenverschlussventil in Richtung der Verschlussstellung vorbelastet, sowie eine Steuerkolbenfeder, die den Steuerkolben in Richtung der Ruhestellung vorbelastet.

In einer weiteren bevorzugten Ausführungsform ist ein zusätzliches Rückschlagventil vorgesehen, das ein manuelles Ablassen und Hinzufügen von Druckluft ermöglicht, obwohl sich das Reifenverschlussventil in der Verschlussstellung befindet. Hierdurch kann bei einem Ausfall des Systems zur Einstellung des Reifendrucks der Druck der Druckluft in dem Reifen durch ein externes System eingestellt beziehungsweise Luft aus dem Reifen abgelassen werden.

Das erfindungsgemäße System zur Einstellung des Reifendrucks eines Druckluftreifens eines Fahrzeugs weist neben einer Druckluftreifen-Ventilvorrichtung der vorstehend erörterten Art in an sich bekannter Weise eine Druckluftquelle auf, die beispielsweise ein Kompressor sein kann, sowie eine Steuervorrichtung, beispielsweise ein ein Hauptventil aufweisender Steuerblock, wobei diese Steuervorrichtung dazu dient, über eine Druckluftleitung an die Druckleitungsanschlussöffnung des Reifenventilgehäuses der erfindungsgemäßen Druckluftreifen-Ventilvorrichtung angeschlossen zu werden und dort einen vorbestimmten Luftdruck bereitzustellen.

Das erfindungsgemäße Verfahren zur Erhöhung des Reifendrucks eines Druckluftreifens eines Fahrzeugs verwendet das vorstehend beschriebene System und aktiviert zunächst die Steuervorrichtung derart, dass aus der Druckluftquelle Druckluft zur Druckluftanschlussöffnung strömt. Sobald ein gewünschter Solldruck in dem Druckluftreifen erreicht ist, wird der Druckluftstrom zur Druckluftanschlussöffnung beendet. Anschließend wird die Druckluftleitung entlüftet.

Zum Reduzieren des Reifendrucks wird an der Druckluftanschlussöffnung ein Unterdruck erzeugt, um den Steuerkolben in eine Entlüftungsstellung zu bewegen. Wie vorstehend erläutert, wird hierdurch das Reifenverschlussventil geöffnet und die Entlüftungsöffnung freigegeben, sodass Druckluft aus dem Reifen entweichen kann. Sobald ein gewünschter Solldruck erreicht ist, wird ein Druck an der Druckluftanschlussöffnung angelegt, der zur Folge hat, dass der Steuerkolben in die Ruhestellung gelangt. Dies kann beispielsweise durch ein Belüften der Unterdruckleitung erfolgen. Das Reifenverschlussventil kann hierdurch wiederum seine Verschlussstellung einnehmen.

Auf die vorstehend erläuterte Art und Weise ist somit ein Einstellen des Reifendrucks eines Druckluftreifens eines Fahrzeugs möglich.

Die Erfindung wird im Folgenden anhand eines bevorzugten Ausführungsbeispiels unter Bezug auf die Zeichnungen näher erläutert, in der
Fig. 1 eine Schnittdarstellung einer Druckluftreifen-Ventilvorrichtung gemäß einer bevorzugten Ausführungsform der Erfindung in einem ersten Betriebszustand zeigt, in dem der Steuerkolben sich in der Ruhestellung und das Reifenverschlussventil sich in der Verschlussstellung befindet,
Fig. 2 eine Schnittdarstellung der Druckluftreifen-Ventilvorrichtung gemäß Fig. 1 während eines Füllvorgangs des Druckluftreifens zeigt, bei dem sich der Steuerkolben in der Ruhestellung und das Reifenverschlussventil in einer Offenstellung befinden,
Fig. 3 die Druckluftreifen-Ventilvorrichtung gemäß Fig. 1 während des Entlüftens des Reifens zeigt, wobei sich der Steuerkolben in einer Reifenentlüftungsstellung und das Reifenverschlussventil in einer Offenstellung befinden,
Fig. 4 eine perspektivische Darstellung eines Reifenventilgehäuses zeigt,

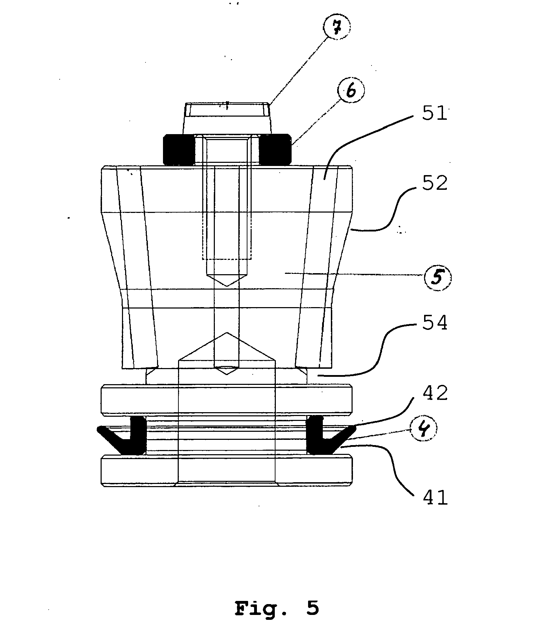

Fig. 5 eine vergrößerte Darstellung des Steuerkolbens zeigt,

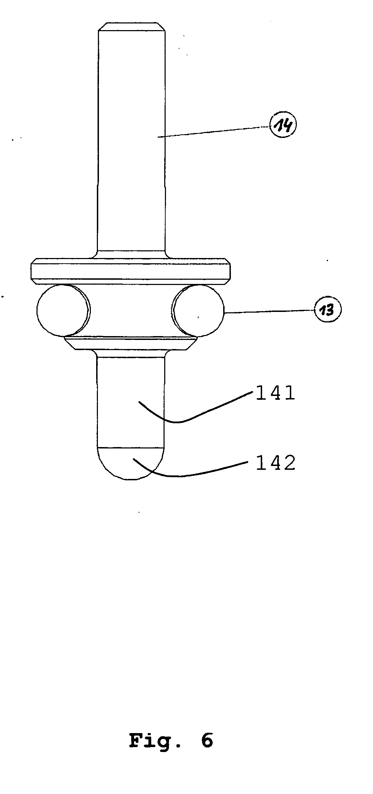

Fig. 6 eine vergrößerte Darstellung des Reifenverschlussventils zeigt und
Fig. 7 eine perspektivische Explosionszeichnung der Druckluftreifen-Ventilvorrichtung gemäß Fig. 1 zeigt.

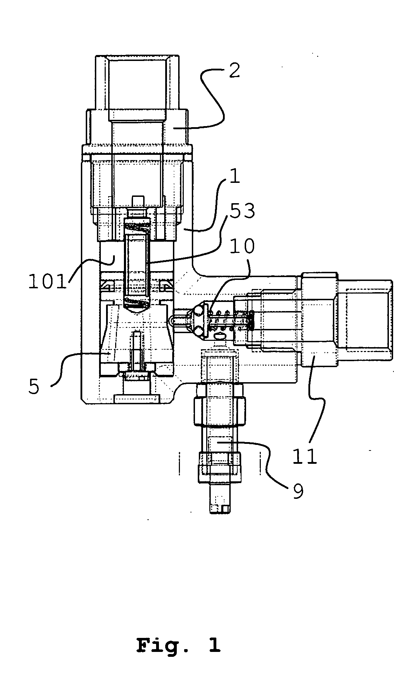

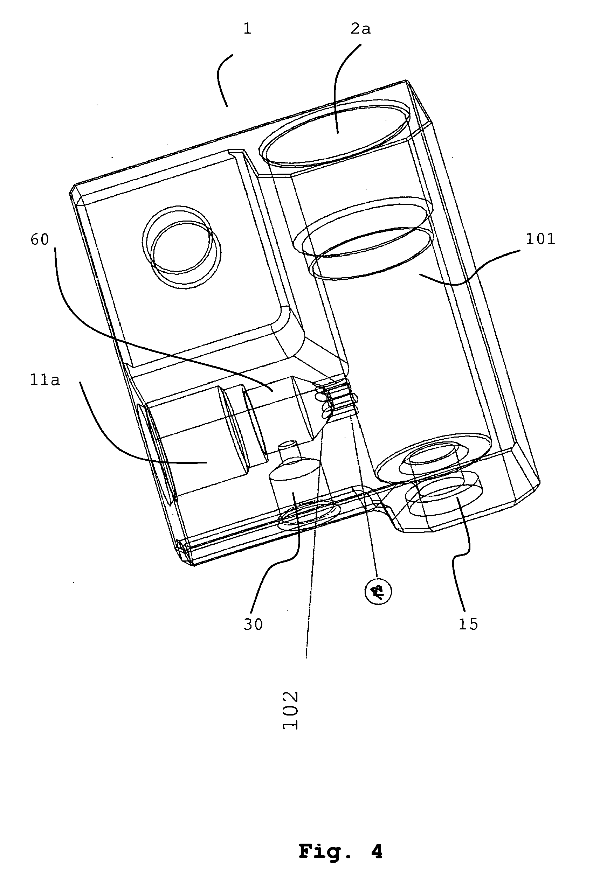

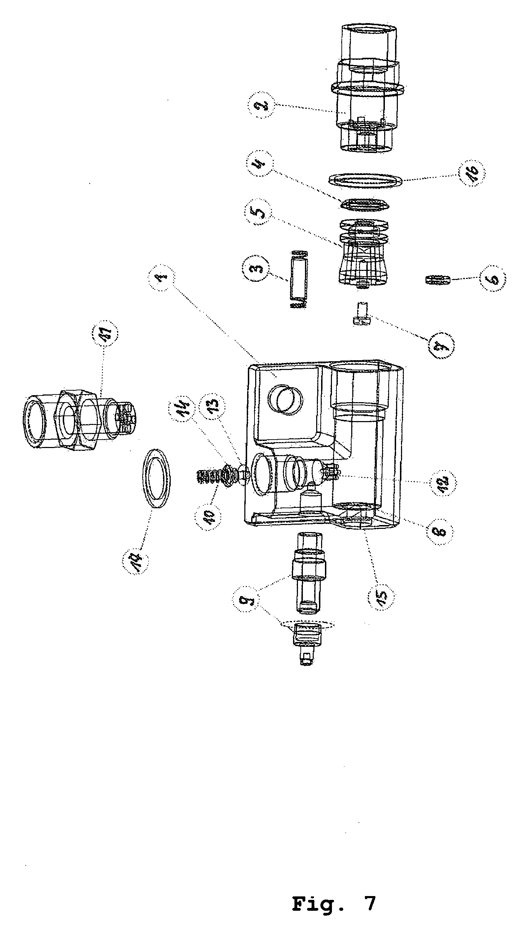

Die Druckluft-Ventilvorrichtung gemäß Fig. 1 weist ein Reifenventilgehäuse 1 (siehe auch z.B. Fig. 4 und Fig. 7) auf, in dem eine Steuerkolbenführung 101 ausgebildet ist, die auf einer Seite mit einer Entlüftungsöffnung 15 und auf der gegenüberliegenden Seite mit einer Druckleitungsanschlussöffnung 2a in Verbindung steht. Die Steuerkolbenführung 101 steht über einen Betätigungsschaftdurchtritt 12 und eine Reifenverschlussventilbohrung 60 mit einer Reifenanschlussöffnung 11a in Verbindung. Eine Rückschlagventilbohrung 30 steht mit der Reifenverschlussventilbohrung 60 in Verbindung.

In der Steuerkolbenführung 101 ist ein Steuerkolben 5 verschiebbar gelagert. Ein Druckleitungsanschlusselement 2 ist in die Druckleitungsanschlussöffnung 2a eingeschraubt. Zwischen dem Druckleitungsanschlusselement 2 und dem Steuerkolben 5 ist eine Steuerkolbenfeder 53 angeordnet, die einen mittels einer Schraube 7 an dem Steuerkolben 5 fixierten Dichtring 6 in einer Ruhestellung des Steuerkolbens 5 gegen eine Dichtkante 8 der Entlüftungsöffnung 15 drückt. In dieser in Fig. 1 gezeigten Ruhestellung verschließt der Steuerkolben 5 die Entlüftungsöffnung 15.

Alternativ kann gemäß einer weiteren, nicht gezeigten Ausführungsform in die der Entlüftungsöffnung zugewandte Stirnfläche des Steuerkolbens eine Ringnut eingestochen sein, beispielsweise mit einem Querschnitt in Schwalbenschwanzform, in die ein Dichtring eingefügt ist.

Der Steuerkolben 5 ist mit einem Spiel von ca. 0,1 mm - 0,5 mm, vorzugsweise von 0,3 mm in der Steuerkolbenführung 101 gelagert. Dies ermöglicht, dass Luft zwischen dem Steuerkolben 5 und der Steuerkolbenführung 101 hindurch treten kann. Alternativ oder zusätzlich kann gemäß einer weiteren, nicht gezeigten Ausführungsform ein Rückschlagventil in dem Steuerkolben angeordnet sein.

Der Steuerkolben 5 weist zudem eine Luftführungsnut 54 und mehrere, beispielsweise sechs Durchtrittsbohrungen 51 auf, welche von dem Bereich der Luftführungsnut 54 schräg zur Mittelachse des Steuerkolbens 5 nach außen geneigt bis zu der den Dichtring 6 aufweisenden Endfläche des Steuerkolbens 5 verlaufen.

In einer Nut 41 des Steuerkolbens 5 ist eine als Dichtelement 4 dienende Lippendichtung eingesetzt, deren umlaufende Dichtlippe 42 nicht senkrecht zur Mittelachse des Steuerkolbens 5 verläuft, sondern schräg zu der den Dichtring 6 aufweisenden Endseite des Steuerkolbens 5 hin geneigt ist. Dies ermöglicht eine Verformung der Dichtlippe 42 in einer Richtung zu der vorstehend genannten Endseite des Steuerkolbens 5 hin, wenn Druckluft in diese Richtung strömt, während bei einem Druckgefälle in Gegenrichtung die Spitze der Dichtlippe 42 gegen die Wandung der Steuerkolbenführung 101 gedrückt wird.

In der Reifenverschlussventilbohrung 60 ist ein Reifenverschlussventil 14 so angeordnet, dass ein Betätigungsschaft 141 mit einem Betätigungsschaftende 142 sich durch den Betätigungsschaftdurchtritt 12 hindurch erstreckt. In einer Verschlussstellung des Reifenverschlussventils 14 liegt ein an diesem befestigter Reifenverschlussventildichtring 13 auf einem konisch ausgeführten Reifenverschlussventilsitz 102 auf.

In die Reifenanschlussöffnung 11a ist ein Reifenanschlusselement 11 eingeschraubt. Zwischen dem Reifenanschlusselement 11 und dem Reifenverschlussventil 14 ist eine Reifenverschlussventilfeder 10 angeordnet, die das Reifenverschlussventil 14 mit seinem Reifenverschlussventildichtring 13 gegen den Reifenverschlussventilsitz 102 drückt. In dieser Verschlussstellung des Reifenverschlussventils ragt der Betätigungsschaft 141 mit seinem Betätigungsschaftende 142 in die Steuerkolbenführung 101 hinein.

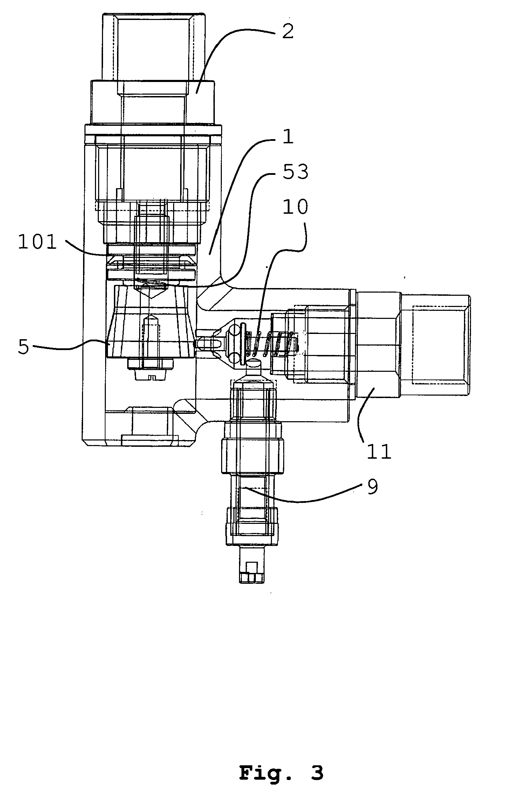

Der Steuerkolben 5 weist eine konisch verlaufende Kontaktfläche 52 auf. Wenn der Steuerkolben 5 aus seiner Ruhestellung gemäß Fig. 1 in eine Entlüftungsstellung gemäß Fig. 3 bewegt wird, gelangt die Kontaktfläche 52 in Berührung mit dem Betätigungsschaftende 142 des Betätigungsschafts 141 und verschiebt hierdurch das Reifenverschlussventil 14 so, dass es in eine Offenstellung gelangt, in der der Reifenverschlussdichtring 13 von dem Reifenverschlussventilsitz 102 gelöst ist.

Das Druckleitungsanschlusselement 2 ist bei einer betriebsbereiten Druckluftreifen-Ventilvorrichtung mit einer Druckleitung (nicht gezeigt) verbunden, die wiederum mit einer Steuervorrichtung (nicht gezeigt) verbunden ist, welche aus einer Druckluftquelle (nicht gezeigt) Luft mit vorbestimmtem Druck an der Druckleitungsanschlussöffnung 2a bereitstellt. Das Reifenanschlusselement 11 ist bei betriebsbereiter Druckluftreifen-Ventilvorrichtung mit dem Inneren des Druckluftreifens in strömungstechnischer Verbindung.

Das Rückschlagventil 9 kann bei Bedarf an eine externe Druckquelle angeschlossen werden, sodass der Druck des Druckluftreifens (nicht gezeigt) auch von einem separaten externen System (nicht gezeigt) angehoben werden kann, wobei in diesem Fall das Reifenverschlussventil 14 in der Verschlussstellung verbleibt. Es versteht sich, dass mittels des Rückschlagventils 9 auch ein manuelles Ablassen von Druckluft aus dem Druckluftreifen erfolgen kann, wobei wiederum das Reifenverschlussventil 14 in der Verschlussstellung verbleibt.

Im Folgenden wird die Betriebsweise der Druckluftreifen-Ventilvorrichtung erläutert.

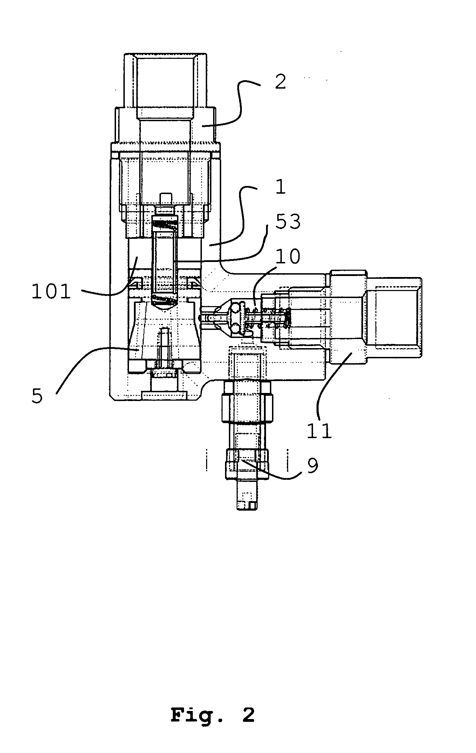

Fig. 1 zeigt die Druckluftreifen-Ventilvorrichtung in der üblichen Ruhestellung, in der sich der Steuerkolben 5 in seiner Ruhestellung und das Reifenverschlussventil 14 in seiner Verschlussstellung befinden. Soll nun der Druck in dem Druckluftreifen erhöht werden, wird von der nicht gezeigten Druckluftquelle (beispielsweise ein Druckreservoir oder ein Kompressor) über eine Steuervorrichtung (nicht gezeigt) und eine Druckluftleitung (nicht gezeigt) entsprechende Druckluft über das Druckleitungsanschlusselement 2 in die Steuerkolbenführung 101 eingeleitet. Da die Dichtlippe 42 der Lippendichtung 4 die zuvor erwähnte Neigung und Verformbarkeit aufweist und zwischen dem Steuerkolben 5 und den Seitenwänden der Steuerkolbenführung 101 das zuvor erwähnte Spiel bereitgestellt ist, kann die Druckluft an der Lippendichtung 4 und dem Steuerkolben 5 vorbeiströmen und das Reifenverschlussventil 14 gegen den Reifeninnendruck und die Kraft der Reifenverschlussventilfeder 10 aufdrücken. Diese Offenstellung des Reifenverschlussventils 14 ist in Fig. 2 dargestellt.

Sobald der gewünschte Reifendruck erreicht ist, wird die Zufuhr von Druckluft unterbrochen und durch Betätigung eines Entlüftungsventils (nicht gezeigt) in der nicht gezeigten Steuervorrichtung wird der Druck im Bereich der Druckleitungsanschlussöffnung abgebaut. Das Reifenverschlussventil 14 wird dann durch den Innendruck des Reifens sowie die Kraft der Reifenverschlussventilfeder 10 zurück in die Verschlussstellung gemäß Fig. 1 gedrückt. Auf diese Weise kann der Druck in dem Druckluftreifen exakt auf einen vorbestimmten Wert angehoben werden und die Zuleitung zu der Druckluftreifen-Ventilvorrichtung kann nach dem Füllvorgang in einen drucklosen Zustand versetzt werden.

Im Folgenden wird das Entlüften eines Reifens, d. h. das Reduzieren des Reifendrucks beschrieben. Hierzu wird an der Druckleitungsanschlussöffnung ein Unterdruck angelegt. Dies bewirkt, dass der Steuerkolben 5 von der Ruhestellung in eine Reifenentlüftungsstellung gelangt. Hierdurch wird zum einen die konische Kontaktfläche 52 des Steuerkolbens 12 so in Berührung mit dem Betätigungsschaftende 142 des Betätigungsschafts 141 des Reifenverschlussventils 14 gebracht, dass das Reifenverschlussventil 14 in eine Offenstellung gedrückt wird, und zum anderen wird die Entlüftungsöffnung 15 frei gegeben. Druckluft aus dem Druckluftreifen (nicht gezeigt) kann somit durch die Reifenanschlussöffnung 11a, den Betätigungsschaftdurchtritt 12, die Luftführungsnut 54 und die in dem Steuerkolben 5 angeordneten Durchtrittsbohrungen 51 und die Entlüftungsöffnung 15 ins Freie entweichen.

Wenn ein vorbestimmter Reifendruck erreicht ist, wird durch das Schließen eines entsprechenden Ventils in der Steuervorrichtung (nicht gezeigt) bewirkt, dass an der Druckleitungsanschlussöffnung 2a kein Unterdruck mehr anliegt. Dies hat zur Folge, dass der Steuerkolben 5 durch die Steuerkolbenfeder 53 in seine Ruhestellung zurückbewegt wird, was wiederum zur Folge hat, dass die Kontaktfläche 52 außer Eingriff mit dem Betätigungsschaftende 142 des Betätigungsschafts 141 des Reifenverschlussventils 14 gelangt und das Reifenverschlussventil 14 durch den Innendruck des Druckluftreifens und die Reifenverschlussventilfeder 10 in seine Verschlussstellung gebracht wird.

### Bezugszeichen

- 1: Reifenventilgehäuse
- 2: Druckleitungsanschlusselement
- 2a: Druckleitungsanschlussöffnung
- 3: Steuerkolbenfeder
- 4: Dichtelement, Lippendichtung
- 5: Steuerkolben
- 6: Dichtring
- 7: Schraube zur Fixierung des Dichtrings
- 8: Dichtkante Entlüftungsöffnung
- 9: Rückschlagventil
- 10: Reifenverschlussventilfeder
- 11: Reifenanschlusselement
- 11a: Reifenanschlussöffnung
- 12: Betätigungsschaftdurchtritt
- 13: Reifenverschlussventildichtring
- 14: Reifenverschlussventil
- 15: Entlüftungsöffnung
- 16: Dichtring

- 30: Rückschlagventilbohrung

- 41: Nut
- 42: Dichtlippe

- 51: Durchtrittsbohrungen
- 52: Kontaktfläche
- 53: Steuerkolbenfeder
- 54: Luftführungsnut

- 60: Reifenverschlussventilbohrung

- 101: Steuerkolbenführung
- 102: Reifenverschlussventilsitz

- 141: Betätigungsschaft
- 142: Betätigungsschaftende

## Patentansprüche

1. Druckluftreifen-Ventilvorrichtung umfassend:
ein Reifenventilgehäuse (1) mit einer Druckleitungsanschlussöffnung (2), an die eine Druckluftleitung anschließbar ist, mit einer Reifenanschlussöffnung (11), die an einen Druckluftreifen anschließbar ist, und mit einer Entlüftungsöffnung (15),
einem Reifenverschlussventil (14), das eine Verschlussstellung und eine Offenstellung einnehmen kann, und
einem Steuerkolben (5), der eine Ruhestellung und eine Reifenentlüftungsstellung einnehmen kann,
wobei der Steuerkolben (5) in der Ruhestellung die Entlüftungsöffnung (15) verschließt und in einer Reifenentlüftungsstellung das Reifenverschlussventil (14) in einer Offenstellung hält und die Entlüftungsöffnung (15) freigibt, so dass Luft aus dem Druckluftreifen durch die Entlüftungsöffnung (15) abgelassen werden kann, und
wobei der Steuerkolben so ausgelegt ist, dass in seiner Ruhestellung Druckluft in den Druckluftreifen gelangen kann und dass er durch Anlegen eines Unterdrucks an die Druckleitungsanschlussöffnung (2) in die Reifenentlüftungsstellung gebracht werden kann.

2. Druckluftreifen-Ventilvorrichtung nach Anspruch 1, **dadurch gekennzeichnet, dass** der Steuerkolben (5) in einer Steuerkolbenführung (101) geführt und dazu ausgelegt ist, ein Durchlassen von Druckluft in einer ersten Richtung zu ermöglichen und den Durchtritt von Luft in einer zweiten Richtung zu sperren.

3. Druckluftreifen-Ventilvorrichtung nach Anspruch 2, **dadurch gekennzeichnet, dass** der Steuerkolben (5) ein Rückschlagventil aufweist, das ein Durchlassen von Druckluft durch den Steuerkolben (5) in einer ersten Richtung ermöglicht und den Durchtritt von Luft in einer zweiten Richtung versperrt.

4. Druckluftreifen-Ventilvorrichtung nach Anspruch 2, **dadurch gekennzeichnet, dass** der Steuerkolben (5) ein Dichtelement (4) aufweist, das ein Durchlassen von Druckluft zwischen dem Steuerkolben (5) und der Steuerkolbenführung (101) in einer ersten Richtung ermöglicht und den Durchtritt von Luft in einer zweiten Richtung versperrt,
wobei das Dichtelement (4) ein Lippendichtring ist, der in einer Nut (41) des Steuerkolbens (5) gehalten ist, und
wobei der Lippendichtring (4) eine Dichtlippe (42) aufweist, die schräg zu der Steuerkolbenführung (101) verläuft.

5. Druckluftreifen-Ventilvorrichtung nach einem der Ansprüche 2 bis 4, **dadurch gekennzeichnet, dass** in dem Reifenventilgehäuse (1) die Steuerkolbenführung (101), die Druckleitungsanschlussöffnung (2), die Reifenanschlussöffnung (11) und die Entlüftungsöffnung (15) miteinander verbunden sind und
dass der Steuerkolben (5) Durchtrittsbohrungen (51) aufweist.

6. Druckluftreifen-Ventilvorrichtung nach einem der vorstehenden Ansprüche, **dadurch gekennzeichnet, dass** der Steuerkolben (5) eine konisch verlaufende Kontaktfläche (52) aufweist, die in einer Reifenentlüftungsstellung des Steuerkolbens (5) das Reifenverschlussventil (14) in einer Offenstellung hält.

7. Druckluftreifen-Ventilvorrichtung nach einem der vorstehenden Ansprüche, **dadurch gekennzeichnet, dass** das Reifenverschlussventil (14) einen Betätigungsschaft (141) mit einem Betätigungsschaftende (142) aufweist,
wobei das Reifenverschlussventil (14) über die Kontaktfläche (52) des Steuerkolbens (5) und das Betätigungsschaftende (142) in eine Offenstellung bringbar ist.

8. Druckluftreifen-Ventilvorrichtung nach einem der vorstehenden Ansprüche, **dadurch gekennzeichnet, dass** das Reifenventilgehäuse (1) einen Betätigungsschaftdurchtritt (12) aufweist, der mit der Steuerkolbenführung (101), der Druckleitungsanschlussöffnung (2), der Reifenanschlussöffnung (11) und der Entlüftungsöffnung (15) verbunden ist,
wobei sich der Betätigungsschaft (141) des Reifenverschlussventils (14) durch den Betätigungsschaftdurchtritt (12) erstreckt.

9. Druckluftreifen-Ventilvorrichtung nach einem der vorstehenden Ansprüche, **gekennzeichnet durch** eine Reifenverschlussventilfeder (10), die das Reifenverschlussventil (14) in Richtung der Verschlussstellung belastet.

10. Druckluftreifen-Ventilvorrichtung nach einem der vorstehenden Ansprüche, **gekennzeichnet durch** eine Steuerkolbenfeder (53), die den Steuerkolben (5) in Richtung der Ruhestellung belastet.

11. Druckluftreifen-Ventilvorrichtung nach einem der vorstehenden Ansprüche, **gekennzeichnet durch** ein zusätzliches Rückschlagventil (9), dass ein manuelles Ablassen und Hinzufügen von Druckluft ermöglicht, wenn sich das Reifenverschlussventil (14) in der Verschlussstellung befindet.

12. System zur Einstellung des Reifendrucks eines Druckluftreifens eines Fahrzeugs mit einer Druckluftreifen-Ventilvorrichtung gemäß den vorstehenden Ansprüchen, einer Druckluftquelle und einer Steuervorrichtung, die über eine Druckluftleitung mit der Druckluftreifen-Ventilvorrichtung verbunden ist.

13. Verfahren zum Erhöhen des Reifendrucks eines Druckluftreifens eines Fahrzeugs mit einem System gemäß Anspruch 12 mit den folgenden Schritten:
- Aktivieren der Steuervorrichtung derart, dass aus der Druckluftquelle Druckluft zur Druckluftanschlussöffnung strömt,
- Aktivieren der Steuervorrichtung derart, dass der Druckluftstrom zur Druckluftanschlussöffnung beendet wird, sobald ein gewünschter Solldruck in dem Druckluftreifen erreicht ist,
- Aktivieren der Steuervorrichtung derart, dass die Druckluftleitung entlüftet wird.

14. Verfahren zum Reduzieren des Reifendrucks eines Druckluftreifens eines Fahrzeugs mit einem System gemäß Anspruch 24 mit den folgenden Schritten:
- Aktivieren der Steuervorrichtung derart, dass an der Druckluftanschlussöffnung ein Unterdruck entsteht, um den Steuerkolben in eine Entlüftungsstellung zu bewegen,
- Aktivieren der Steuervorrichtung derart, dass an der Druckluftanschlussöffnung ein Druck anliegt, der den Steuerkolben in die Ruhestellung bringt, sobald ein gewünschter Solldruck in dem Druckluftreifen erreicht ist,

15. Verfahren zum Einstellen des Reifendrucks eines Druckluftreifens eines Fahrzeugs mit den Verfahrensschritten gemäß den Ansprüchen 13 und 14.

## Claims

1. Valve device for a pneumatic tyre, comprising:
a tyre valve housing (1) with a pressure line connection opening (2) to which a compressed-air line can be connected, with a tyre connection opening (11) which can be connected to a pneumatic tyre, and with an deflation opening (15),
a tyre shutoff valve (14) which can take a shutoff position and an open position, and
a control piston (5) which can take a rest position and a tyre deflation position,
wherein the control piston (5) closes the deflation opening (15) in the rest position, and in a tyre deflation position retains the tyre shutoff valve (14) in an open position and releases the deflation opening (15), so that air can be discharged from the pneumatic tyre through the deflation opening (15), and
wherein the control piston is designed such that in its rest position, compressed air can get into the pneumatic tyre, and that by applying a vacuum to the pressure line connection opening (2), it can be brought into the tyre deflation position.

2. Valve device for a pneumatic tyre according to claim 1, **characterized in that** the control piston (5) is guided in a control piston guide (101) and designed to permit the passage of compressed air in a first direction and to shut off the passage of air in a second direction.

3. Valve device for a pneumatic tyre according to claim 2, **characterized in that** the control piston (5) comprises a check valve which permits the passage of compressed air through the control piston (5) in a first direction and shuts off the passage of air in a second direction.

4. Valve device for a pneumatic tyre according to claim 2, **characterized in that** the control piston (5) comprises a sealing element (4) which permits the passage of compressed air between the control piston (5) and the control piston guide (101) in a first direction and shuts off the passage of air in a second direction,
wherein the sealing element (4) is a lip seal ring which is retained in a groove (41) of the control piston (5), and
wherein the lip seal ring (4) comprises a sealing lip (42) which extends obliquely to the control piston guide (101).

5. Valve device for a pneumatic tyre according to one of claims 2 to 4, **characterized in that** in the tyre valve housing (1), the control piston guide (101), the pressure line connection opening (2), the tyre connection opening (11), and the deflation opening (15) are connected with each other, and
that the control piston (5) comprises through bores (51).

6. Valve device for a pneumatic tyre according to one of the preceding claims, **characterized in that** the control piston (5) comprises a conically extending contact surface (52) which in a tyre deflation position of the control piston (5) retains the tyre shutoff valve (14) in an open position.

7. Valve device for a pneumatic tyre according to one of the preceding claims, **characterized in that** the tyre shutoff valve (14) comprises an actuating shaft (141) with an actuating shaft end (142),
wherein the tyre shutoff valve (14) can be brought into an open position via the contact surface (52) of the control piston (5) and the actuating shaft end (142).

8. Valve device for a pneumatic tyre according to one of the preceding claims, **characterized in that** the tyre valve housing (1) comprises an actuating shaft passage (12) which is connected with the control piston guide (101), the pressure line connection opening (2), the tyre connection opening (11), and the deflation opening (15),
wherein the actuating shaft (141) of the tyre shutoff valve (14) extends through the actuating shaft passage (12).

9. Valve device for a pneumatic tyre according to one of the preceding claims, **characterized by** a tyre shutoff valve spring (10) which loads the tyre shutoff valve (14) in the direction of the shutoff position.

10. Valve device for a pneumatic tyre according to one of the preceding claims, **characterized by** a control piston spring (53) which loads the control piston (5) in the direction of the rest position.

11. Valve device for a pneumatic tyre according to one of the preceding claims, **characterized by** an additional check valve (9) which permits a manual discharge and addition of compressed air when the tyre shutoff valve (14) is in the shutoff position.

12. System for adjusting the tyre pressure of a pneumatic tyre of a vehicle with a valve device for a pneumatic tyre according to the preceding claims, a source of compressed air, and a control device which is connected to the valve device for a pneumatic tyre via a compressed-air line.

13. Method of increasing the tyre pressure of a pneumatic tyre of a vehicle with a system according to claim 12 with the following steps:
- activating the control device such that compressed air flows from the source of compressed air to the compressed-air supply opening,
- activating the control device such that the flow of compressed air to the compressed-air supply opening is terminated as soon as a desired specified pressure in the pneumatic tyre is reached,
- activating the control device such that the compressed-air line is vented.

14. Method of reducing the tyre pressure of a pneumatic tyre of a vehicle with a system according to claim 13 with the following steps:
- activating the control device such that a vacuum occurs at the compressed-air supply opening to move the control piston to a deflation position,
- activating the control device such that a pressure is applied at the compressed-air supply opening which brings the control piston to the rest position as soon as a desired specified pressure is reached in the pneumatic tyre.

15. Method of adjusting the tyre pressure of a pneumatic tyre of a vehicle with the procedure steps according to claims 13 and 14.

## Revendications

1. Dispositif de soupape pour pneu pneumatique, comprenant:
un boîtier de soupape du pneu (1) avec une ouverture de raccordement d'un conduit d'air comprimé (2) à laquelle un conduit d'air comprimé peut être raccordé, avec une ouverture de raccordement du pneu (11), qui peut être raccordée au pneu pneumatique, et avec une ouverture d'échappement (15),
une soupape de fermeture du pneu (14) qui peut prendre une position de fermeture et une position d'ouverture et
un piston de commande (5) qui peut prendre une position de repos et une position d'échappement du pneu,
le piston de commande (5) fermant en position de repos l'ouverture d'échappement (15) et maintenant dans une position d'échappement du pneu la soupape de fermeture du pneu (14) dans une position ouverte et libérant l'ouverture d'échappement (15), de telle sorte que l'air peut sortir du pneu pneumatique par l'ouverture d'échappement (15), et
le piston de commande étant conçu de telle sorte que dans sa position de repos l'air comprimé peut s'introduire dans le pneu pneumatique et qu'il peut être amené à la position d'échappement du pneu en créant une basse pression à l'ouverture de raccordement du conduit d'air comprimé (2).

2. Dispositif de soupape pour pneu pneumatique selon la revendication 1, **caractérisé par le fait que** le piston de commande (5) est guidé dans un guidage de piston de commande (101) et conçu de telle sorte qu'il peut permettre une sortie d'air comprimé dans une première direction et de bloquer le passage d'air dans une deuxième direction.

3. Dispositif de soupape pour pneu pneumatique selon la revendication 2, **caractérisé par le fait que** le piston de commande (5) présente un valve de retenue, qui permet la sortie d'air comprimé par le piston de commande (5) dans une première direction et bloque le passage d'air dans une deuxième direction.

4. Dispositif de soupape pour pneu pneumatique selon la revendication 2, **caractérisé par le fait que** le piston de commande (5) présente un élément d'étanchéité (4), qui permet une sortie d'air comprimé entre le piston de commande (5) et le guidage de piston de commande (101) dans une première direction et bloque le passage d'air dans une deuxième direction,
l'élément d'étanchéité (4) étant une bague d'étanchéité à lèvre, qui est maintenu dans une rainure (41) du piston de commande (5), et
la bague d'étanchéité à lèvre (4) présentant une lèvre d'étanchéité (42), qui s'étend obliquement par rapport au guidage de piston de commande (101).

5. Dispositif de soupape pour pneu pneumatique selon une des revendications 2 à 4, **caractérisé par le fait que** le guidage de piston de commande (101), l'ouverture de raccordement du conduit d'air comprimé (2), l'ouverture de raccordement du pneu (11) et l'ouverture d'échappement (15) sont reliés entre eux dans le boîtier de soupape de pneu (1) et
que le piston de commande (5) présente des alésages de passage (51).

6. Dispositif de soupape pour pneu pneumatique selon l'une des revendications précédentes, **caractérisé par le fait que** le piston de commande (5) présente une surface de contact (52) conique qui maintient la soupape de fermeture du pneu (14) en position ouverte dans une position d'échappement du pneu du piston de commande (5).

7. Dispositif de soupape pour pneu pneumatique selon l'une des revendications précédentes, **caractérisé par le fait que** la soupape de fermeture du pneu (14) présente une tige d'actionnement (141) avec une extrémité de tige d'actionnement (142),
la soupape de fermeture du pneu (14) pouvant être amenée dans une position ouverte par l'intermédiaire de la surface de contact (52) du piston de commande (5) et de l'extrémité de tige d'actionnement (142).

8. Dispositif de soupape pour pneu pneumatique selon l'une des revendications précédentes, **caractérisé par le fait que** le boîtier de soupape de pneu (1) présente un passage de tige d'actionnement (12), qui est relié au guidage de piston de commande (101), à l'ouverture de raccordement du conduit d'air comprimé (2), à l'ouverture de raccordement du pneu (11) et à l'ouverture d'échappement (15),
la tige d'actionnement (141) de la soupape de fermeture du pneu (14) s'étendant par le passage de tige d'actionnement (12).

9. Dispositif de soupape pour pneu pneumatique selon l'une des revendications précédentes, **caractérisé par** un ressort de soupape de fermeture du pneu (10), qui sollicite la soupape de fermeture du pneu (14) dans la direction de la position de fermeture.

10. Dispositif de soupape pour pneu pneumatique selon l'une des revendications précédentes, **caractérisé par** un ressort de piston de commande (53), qui sollicite le piston de commande (5) dans la direction de la position de repos.

11. Dispositif de soupape pour pneu pneumatique selon l'une des revendications précédentes, **caractérisé par** une valve de retenue supplémentaire (9), qui permet une évacuation et un ajout manuels d'air comprimé quand la soupape de fermeture du pneu (14) se trouve en position de fermeture.

12. Système de réglage de la pression de pneu d'un pneu pneumatique d'un véhicule avec un dispositif de soupape pour pneu pneumatique selon les revendications précédentes, d'une source d'air comprimé et d'un dispositif de commande, qui est relié par l'intermédiaire d'un conduit d'air comprimé au dispositif de soupape pour pneu pneumatique.

13. Procédé d'augmentation de la pression de pneu d'un pneu pneumatique d'un véhicule doté d'un système selon la revendication 12 comprenant les étapes suivantes:
- activation du dispositif de commande de telle manière que, à partir de la source d'air comprimé, de l'air comprimé s'échappe de l'ouverture de raccordement d'air comprimé,
- activation du dispositif de commande de telle manière que le flux d'air comprimé s'arrête à l'ouverture de raccordement d'air comprimé dès qu'une pression de consigne souhaitée est atteinte dans le pneu pneumatique,
- activation du dispositif de commande de telle manière que le conduit d'air comprimé est purgé.

14. Procédé de réduction de la pression de pneu d'un pneu pneumatique d'un véhicule doté d'un système selon la revendication 13 comprenant les étapes suivantes:
- activation du dispositif de commande de telle manière qu'il apparaît une basse pression au niveau de l'ouverture de raccordement d'air comprimé pour déplacer le piston de commande dans une position d'échappement,
- activation du dispositif de commande de telle manière qu'il se créé une pression au niveau de l'ouverture de raccordement d'air comprimé qui amène le piston de commande en position de repos dès qu'une pression de consigne souhaitée est atteinte dans le pneu pneumatique.

15. Procédé de réglage de la pression de pneu d'un pneu pneumatique d'un véhicule comprenant les étapes de procédé selon les revendications 13 et 14.
